(19) Europäisches Patentamt

European Patent Office

Office européen des brevets

(11) **EP 4 727 024 A1**

(12) **EUROPEAN PATENT APPLICATION**

(43) Date of publication:
**15.04.2026 Bulletin 2026/16**

(21) Application number: **25200155.7**

(22) Date of filing: **04.09.2025**

(51) International Patent Classification (IPC):
**H04B 7/024** (2017.01)

(52) Cooperative Patent Classification (CPC):
**H04B 7/024; H04B 7/0452**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.09.2024 US 202463690492 P
21.10.2024 US 202463709746 P
29.08.2025 US 202519314491**

(71) Applicant: **Samsung Electronics Co., Ltd.
Suwon-si, Gyeonggi-do 16677 (KR)**

(72) Inventor: **YAN, Aiguo
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **COORDINATED BEAMFORMING (COBF) CONFIGURATION AND RECEIVER PROCESSING FOR WIRELESS NETWORKS**

(57)      A system and a method are disclosed for providing coordinated beamforming. CoBF, transmission in a wireless communication system. The method includes: selecting a plurality of access points, APs, (405, 410) to transmit to a plurality of stations, STAs, in a CoBF transmission; assigning spatial streams to the STAs such that each STA is assigned no more than a threshold number of spatial streams, and the total number of spatial streams assigned to the STAs does not exceed a maximum total stream count; configuring each of the APs to use a common number of logical antennas selected from a set of antenna counts; and mapping a number of physical antennas at each AP to the common number of logical antennas using a configurable antenna reduction method.

FIG. 4

Description

## TECHNICAL FIELD

The disclosure generally relates to wireless communication systems. More particularly, the subject matter disclosed herein relates to improvements to coordinated beamforming (CoBF) configurations and receiver processing techniques in multi-user multiple-input multiple-output (MU-MIMO) systems.

## SUMMARY

Wireless communication systems increasingly utilize MIMO techniques to improve spectral efficiency, throughput, and link reliability. In MU-MIMO systems, a transmitter equipped with multiple antennas sends independent data streams to multiple users simultaneously. CoBF extends this approach by enabling multiple access points (APs) to jointly transmit to multiple stations (STAs) in a coordinated manner. By sharing channel state information and aligning their transmissions, CoBF can suppress interference and enhance network performance, particularly in deployment scenarios such as enterprise Wi-Fi networks. Effective implementation of CoBF requires standardized stream and user configurations, precise coordination between APs, and advanced receiver algorithms capable of mitigating residual interference.

Existing MU-MIMO systems use beamforming techniques in which each AP independently manages its own transmissions. These approaches rely on fixed configurations for assigning users and spatial streams, which limits adaptability in dynamic environments. On the receiver side, interference mitigation is performed using filtering techniques such as minimum variance distortionless response (MVDR) and linear minimum mean square error (LMMSE), which depend on accurate estimation of channel statistics. However, these techniques may not perform well when the number of receive antennas is greater than the number of transmit antennas.

One issue with the above approach is that MU-MIMO and CoBF systems lack coordination in antenna configuration and stream assignment across multiple APs, which can result in unnecessary use of antenna resources and increased interference between APs. Moreover, receivers implement separate processing pipelines for CoBF and MU-MIMO signals, resulting in unnecessary hardware duplication and increased complexity. In dense deployments, this approach can prevent joint beamforming across APs, degrade user throughput, and make it difficult to scale coordinated transmissions efficiently.

To overcome these issues, systems and methods are described herein for (i) configuring CoBF transmissions across multiple APs using a unified framework for stream assignment and antenna mapping, and (ii) processing received CoBF and MU-MIMO signals using a shared receiver structure that projects received signals into receiver-specific subspaces to isolate desired streams while suppressing interference. Additional aspects include: assigning spatial streams to user STAs based on configurable thresholds and stream constraints; reducing physical antennas to a common logical antenna count at each AP using configurable antenna reduction methods; and using a common signal processing pipeline at the receiver for both CoBF and MU-MIMO approaches.

The above approaches improve on previous methods because they enable APs to coordinate more effectively while retaining configuration flexibility, leading to more efficient use of resources and better scalability. On the receiver side, a shared projection-based processing structure reduces implementation complexity, improves performance in environments with interference and facilitates support for coordinated and uncoordinated multi-user transmissions.

In an embodiment, a method for providing CoBF transmission in a wireless communication system comprises: selecting a plurality of APs to transmit to a plurality of STAs in a CoBF transmission; assigning spatial streams to the STAs such that each STA is assigned no more than a threshold number of spatial streams, and the total number of spatial streams assigned to the STAs does not exceed a maximum total stream count; configuring each of the APs to use a common number of logical antennas selected from a set of antenna counts; and mapping a number of physical antennas at each AP to the common number of logical antennas using a configurable antenna reduction method.

In an embodiment, a method of processing a wireless signal at a receiver in a wireless communication system comprises: receiving a wireless signal including a plurality of spatially multiplexed data streams transmitted by one or more APs using CoBF or MU-MIMO; processing the wireless signal to extract one or more data streams intended for the receiver by projecting the wireless signal into a subspace corresponding to the receiver; and providing the extracted data streams to a demodulator for data recovery, wherein the processing is performed using a shared signal processing pipeline for the CoBF and MU-MIMO transmissions.

In an embodiment, a wireless communication system configured to provide CoBF transmission comprises: a plurality of APs, each comprising: a plurality of physical antennas; and signal processing circuitry configured to map a number of the physical antennas to a common number of logical antennas; and a controller configured to: select a plurality of APs to transmit to a plurality of STAs in the CoBF transmission; assign spatial streams to the STAs such that each STA is assigned no more than a threshold number of spatial streams, and a total number of spatial streams assigned to the STAs does not exceed a maximum total stream count; and configure each of the APs to use the common number of logical antennas selected from a set of antenna counts.

## BRIEF DESCRIPTION OF THE DRAWINGS

In the following section, the aspects of the subject matter disclosed herein will be described with reference to exemplary embodiments illustrated in the figures, in which:

FIG. 1 is a block diagram illustrating a CoBF transmission scenario in a wireless communication system, according to an embodiment;
FIG. 2 is a flowchart illustrating a method of configuring a CoBF transmission, according to an embodiment;
FIG. 3 is a diagram illustrating joint sounding for CoBF, according to an embodiment;
FIG. 4 is a block diagram illustrating a receiver architecture configured to process a wireless signal transmitted using CoBF or MU-MIMO, according to an embodiment;
FIG. 5 is a flowchart illustrating a method of processing a signal at a receiver in a wireless communication system, according to an embodiment;
FIG. 6 is a block diagram of an electronic device in a network environment, according to an embodiment; and
FIG. 7 shows a system including a STA and an AP in communication with each other.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

"Access point" as used herein refers to a wireless transmitter configured to participate in CoBF or MU-MIMO transmission. Some examples of "access point" are enterprise Wi-Fi APs, wireless routers, or base stations in a multi-AP system. "Station" as used herein refers to a wireless receiver device configured to receive spatially multiplexed data streams. Some examples of "station" are smartphones, laptops, tablets, and other Wi-Fi-enabled devices. "Spatial stream" as used herein refers to an independently encoded data stream transmitted over a MIMO wireless channel using a distinct spatial path. Some examples of "spatial stream" are individual data signals transmitted simultaneously from different antennas of an AP to different stations in a MU-MIMO or CoBF transmission. "Logical antenna" as used herein refers to a signal path or dimension used in MIMO processing that is derived from one or more physical antennas, either by selection or signal transformation. Some examples of "logical antenna" are : (i) a subset of physical antennas selected for transmission, and (ii) a virtual antenna formed by applying a linear transformation (e.g., precoding) to signals from multiple physical antennas. "Antenna counts" as used herein refers to the number of logical antennas configured for transmission or reception in a MIMO system. Some examples of "antenna counts" are 4 and 8, which may be selected based on device capability, protocol constraints, or coordination requirements in a CoBF transmission. "Configurable antenna reduction method" as used herein refers to a technique for mapping a greater number of physical antennas at an AP to a smaller number of logical antennas used for coordinated transmission. Some examples of "configurable antenna reduction method" are selecting a subset of physical antennas or applying a linear transformation (e.g., SVD-based compression) to form logical antenna signals.

"Sounding signal" as used herein refers to a wireless transmission sent by an AP to enable channel estimation at one or more receiving STAs. Some examples of "sounding signal" are null data packets (NDPs), as defined in IEEE 802.11, or other standardized packets used to collect channel state information (CSI) in CoBF or MU-MIMO systems. "Spatially multiplexed data stream" as used herein refers to a data stream transmitted over a specific spatial path provided by MIMO techniques, allowing multiple data streams to be sent simultaneously using different antenna dimensions. Some examples of "spatially multiplexed data stream" are individual user data streams transmitted from different AP antennas to corresponding STAs in a CoBF or MU-MIMO transmission. "Shared signal processing pipeline" as used herein refers to a common set of receiver processing components or operations used to handle multiple types of multi-antenna transmissions, such as CoBF and MU-MIMO, without requiring separate processing paths. Some examples of "shared signal processing pipeline" are a matrix projection module and demodulator used for both CoBF and MU-MIMO receptions, and a unified receiver architecture that supports different transmission modes with minimal configuration changes. "Projection matrix" as used herein refers to matrix used to project a received wireless signal into a subspace associated with the intended receiver, to isolate desired signal components and suppress interference. Some examples of "projection matrix" are an orthonormal matrix derived from the dominant singular vectors of a channel matrix (e.g.,

$$Q_i = \left( U_{ij}^{(1)} \right)^H$$

), and a matrix constructed from estimated channel state information for use in subspace projection.

"MU-MIMO system" as used herein refers to a wireless communication system in which multiple users (e.g., a user device or STA that communicates with an AP) are simultaneously served using MIMO technology. Some examples of "MU-MIMO system" are IEEE 802.11 or 802.11 Wi-Fi networks that support simultaneous data transmission to multiple STAs. "MU-MIMO transmission" as used herein refers to a transmission from one or more APs to multiple user devices using spatial multiplexing. Some examples of "MU-MIMO transmission" are downlink data frames from an 802.11 AP to multiple STAs using distinct spatial streams. "MU-MIMO signal" as used herein refers to the physical-layer signal transmitted during an MU-MIMO transmission. Some examples of "MU-MIMO signal" are orthogonal frequency-division multiplexed (OFDM) signals carrying spatial streams for different users in the same time-frequency resource.

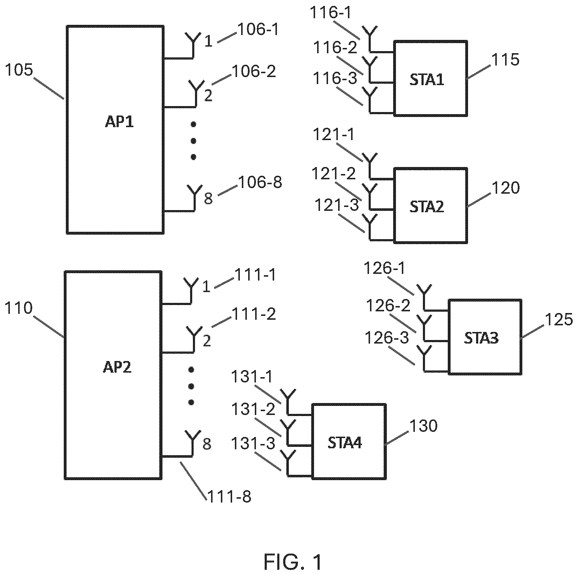

FIG. 1 is a block diagram illustrating a CoBF transmission scenario in a wireless communication system, according to an embodiment.

The system includes two APs, labeled AP1 (105) and AP2 (110), and four STAs, labeled STA1 (115), STA2 (120), STA3 (125), and STA4 (130). Each AP 105 and 110 represents a wireless transmitter configured to participate in a joint CoBF transmission and includes a plurality of physical antennas, shown in FIG. 1 as connected antenna elements (e.g., 106 for AP1 and 111 for AP2). Similarly, each STA 115-130 represents a wireless receiver device configured to receive spatially multiplexed data streams and includes multiple receive antennas (e.g., 116-1 to 116-3, 121-1 to 121-3, 126-1 to 126-3, 131-1 to 131-3), one of which may be designated for feedback or reference purposes.

The APs 105 and 110 are configured to cooperatively transmit up to four spatial streams in total during a CoBF transmission. Each STA 115-130 may be assigned up to two spatial streams. The stream assignment is determined by a scheduling policy that accounts for fairness, channel quality, and system constraints. The number of spatial streams allocated to each AP and the number of STAs served by each AP may vary, provided that the overall configuration supports no more than four STAs and four streams in total. Example combinations include stream assignments such as (3,1), (2,2), or (1,3) across STAs served by the respective APs, and STA allocations such as (2,1) or (1,2) per AP. This approach supports any compatible configuration of up to four users and four streams per CoBF group, enabling flexible adaptation to deployment density and user demand.

To support interoperable operation across heterogeneous AP hardware platforms, each AP 105 and 110 is further configured to use a common (i.e., equal) number of logical antennas selected from a predefined set (e.g., 4 or 8). Actual number of antennas refers to how many physical antennas an AP has installed. Logical antennas are a subset of those physical antennas, selected for use in CoBF. The "common number" refers to how many logical antennas each AP selects from its own physical antennas to participate in CoBF. A configurable antenna reduction method is applied to map the actual number of physical antennas at each AP 105 and 110 to the selected logical antenna count. The configurable antenna reduction method may be an existing antenna reduction method such as antenna selection based on channel norm or eigenvalue thresholding. This mapping may involve selecting a subset of physical antennas or applying a linear transformation, such as principal component projection or matrix weighting, to generate effective logical antenna signals. These techniques are described later in this disclosure and allow APs with different physical configurations to participate in a uniform CoBF operation.

The illustrated system supports joint transmission from AP1 105 and AP2 110 to the STAs 115-130 using shared CSI obtained through a coordinated sounding procedure. The CSI sharing allows the APs 105 and 110 to jointly compute beamforming weights that suppress inter-user interference and enhance signal quality. The STAs 115-130 may also use feedback mechanisms or downlink training to assist in this process. These techniques will also be described in more detail later in this disclosure. The CoBF configuration shown in FIG. 1 reflects a flexible and scalable transmission framework designed for multi-AP environments such as enterprise Wi-Fi networks, and supports consistent stream allocation, antenna configuration, and synchronization across devices.

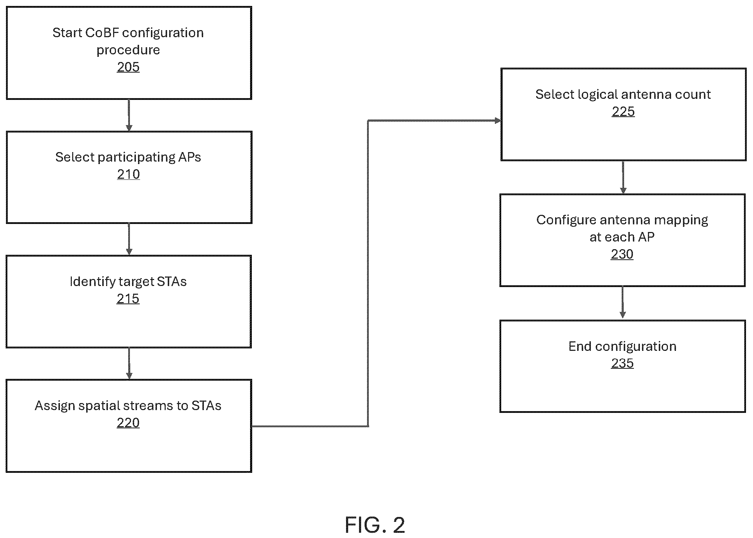

FIG. 2 is a flowchart illustrating a method of configuring a CoBF transmission, according to an embodiment.

At step 205, the system initiates a CoBF configuration procedure. This procedure is triggered upon detection of a CoBF-capable scenario, such as when a STA associates with multiple access points APs or when the network determines that a coordinated transmission would be beneficial for spatial reuse or interference mitigation. For example, in one embodiment, a single STA, e.g., STA1 115, associates with two APs, e.g., 105 and 110, to effectuate CoBF capability. The initiation of this procedure marks the beginning of inter-AP coordination and configuration, including the selection of stream assignments per STA and the logical antenna configuration at each AP. This initial step ensures that all participating APs recognize the CoBF session and begin exchanging the necessary information to support joint transmission. By explicitly initiating the CoBF configuration procedure, the system ensures that the subsequent steps, such as stream allocation and antenna mapping, are performed in a coordinated and standardized manner across the APs.

At step 210, the system selects a subset of APs to participate in the CoBF transmission. This selection is based on predefined criteria such as proximity to the target STAs, traffic demand, channel conditions, and capability indications exchanged over the coordination interface. For example, in a CoBF-capable Wi-Fi deployment, the APs may advertise their CoBF capability via management frames or control messages, and a central coordinator or one of the APs may designate two or more APs to jointly serve a set of STAs. In one embodiment, two APs, e.g., 105 and 110, are selected for the CoBF session, as shown in the illustrative system of FIG. 1. The selected APs are expected to share CSI and cooperate in the downlink transmission, providing joint spatial precoding and interference suppression.

At step 215, the system identifies a set of target STAs to participate in the CoBF transmission. Each target STA may be a wireless device that receives one or more spatially multiplexed data streams from the coordinated APs. The determination of which STAs to include may depend on a variety of factors, such as CSI quality, traffic demand, fairness criteria, and compatibility with resource allocation policies. This selection process identifies participating STAs as candidates for spatial multiplexing under the CoBF framework.

At step 220, the system determines the number of spatial streams to be transmitted during the CoBF session and assigns these streams to the target STAs. The stream assignment process is performed under constraints, including a per-STA stream limit (e.g., no more than two streams per STA) and a total stream count constraint that reflects the maximum number of spatial streams across all STAs (e.g., a maximum of four spatial streams in total). The per-STA stream limit corresponds to a threshold for determining the maximum number of streams assignable to a given STA. The total stream count reflects a system-level maximum to prevent exceeding spatial processing capacity or introducing excessive interference. In step 220, spatial streams are allocated to improve throughput and spectral efficiency while maintaining compatibility with the receiving capabilities of each STA. For example, valid stream allocations (or assignments) may include (3,1), (2,2), or (1,3) across STAs served by the respective APs, and STA allocations (or assignments) such as (2,1) or (1,2) per AP. The allocations may be coordinated centrally or determined by the APs.

At step 225, the system selects a common number of logical antennas to be used by each of the APs participating in the CoBF transmission. The common logical antenna count is selected from a predefined set of allowable values (e.g., four or eight) to enable consistency across APs with potentially different hardware capabilities. The use of a shared (i.e., equal/common) logical antenna count simplifies the CoBF operations and facilitates compatibility with defined protocol expectations. This allows APs with varying numbers of physical antennas to participate in joint transmission while maintaining a unified transmission structure. The selected logical antenna count serves as the effective number of spatial dimensions available for precoding and stream mapping in the CoBF procedure.

At step 230, each participating AP configures its antenna system by mapping its available physical antennas to the selected number of logical antennas. This mapping is performed using a configurable antenna reduction method, which allows the system to standardize the number of logical antennas across heterogeneous AP hardware platforms. As used herein, heterogeneous AP hardware platforms refer to APs with differing physical antenna counts or hardware configurations. The mapping may involve selecting a subset of the physical antennas or applying a linear transformation to combine signals from the physical antennas to form the logical antenna signals.

At step 250, the CoBF configuration procedure concludes following the completion of all preceding setup steps. At this point, the participating APs have selected target STAs, assigned spatial streams, aligned on a common logical antenna configuration, established antenna mapping from their physical antennas, and performed synchronization to enable coordinated transmission. The completion of the configuration phase signals that the system is now prepared for actual data transmission using the CoBF scheme.

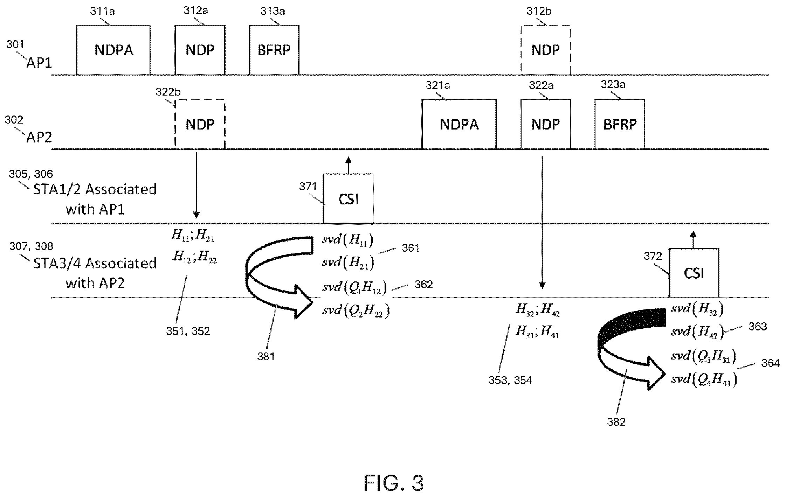

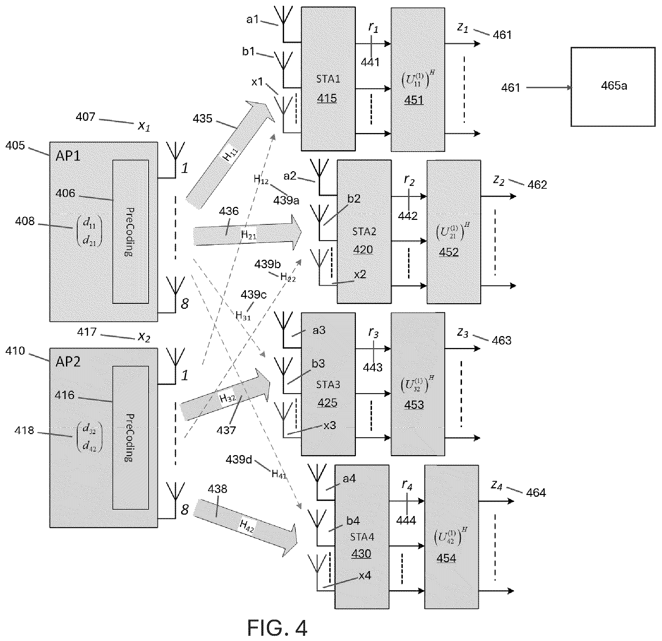

FIG. 3 is a diagram illustrating a joint sounding procedure for CoBF in a wireless communication system, according to an embodiment. "Joint sounding procedure" as used herein refers to a channel sounding technique in which multiple APs transmit sounding signals simultaneously or in overlapping time intervals, allowing STAs to estimate local and cross-link channel responses within a single sounding window. Some examples of "joint sounding procedure" are AP1 and AP2 concurrently transmitting NDPA (Null Data Packet Announcement) and NDP frames to allow STA1 and STA2 to estimate $H_{11}$, $H_{12}$ and $H_{21}$, $H_{22}$, and overlapping transmission of training signals where each STA captures channel responses from multiple APs in parallel. The steps illustrated in FIG. 4 proceed sequentially from left to right in time, with each block representing a corresponding phase in the joint sounding process. As shown, the system includes two APs, AP1 (301) and AP2 (302), and four STAs, e.g., STA1 (305), STA2 (306), STA3 (307), and STA4 (308). The joint sounding operation facilitates CSI acquisition across all APs and STAs in a unified manner, allowing for efficient feedback of precoding-relevant parameters without reconstructing full channel matrices.

Each AP performs a series of sounding operations using a frame sequence comprising an NDPA, NDP, and BFRP (Beamforming Report Poll). AP1 outputs an NDPA (311), followed by an NDP (312s), and subsequently a BFRP (313). Similarly, AP2 outputs an NDPA (321), followed by an NDP (322a), and a BFRP (323). The NDPs transmitted by AP1 and AP2 are received simultaneously or in overlapping fashion by all STAs in the system. Solid lines surrounding 322a refer to in-BSS sounding and dotted lines surrounding 322b refer to cross-BSS sounding.

In this joint sounding scenario, STA1 (305) and STA2 (306) concurrently receive sounding signals from both AP1 (301) and AP2 (302), allowing estimation of their local channel responses $H_{11}$ and $H_{21}$ (351) from AP1, as well as cross-link interference channels $H_{12}$ and $H_{22}$ (352) from AP2. These jointly acquired estimates provide a comprehensive view of the channel environment from the perspective of STA1 and STA2.

The estimated channel matrices are then processed through a separated SVD. In particular, local channel matrices $H_{11}$ and $H_{21}$ are subjected to SVD operations (361) to produce left singular vectors (e.g., unitary matrices $U_{11}^{(1)}$ and $\tilde{U}_{21}^{(1)}$. These unitary matrices are then used to project the cross-link interference channel matrices $H_{12}$ and $H_{22}$, resulting in projected matrices $Q_1 H_{12}$ and $Q_2 H_{22}$. These projected channels are also decomposed via SVD (362) to yield dominant signal subspaces that isolate useful transmission dimensions. The transition from local SVD (361) to cross-link projected SVD (362) is illustrated via arrow (381).

Analogously, STA3 (307) and STA4 (308) perform joint estimation and decomposition for their respective channels. STA3 and STA4 estimate local channel matrices $H_{32}$ and $H_{42}$ (353) from AP2, and cross-link interference

matrices $H_{31}$ and $H_{41}$ (354) from AP1. The local channel matrices are subjected to SVD (363), generating unitary projection matrices $Q_3$ and $Q_4$. These are used to project and then decompose the cross-link channel matrices $Q_3H_{31}$ and $Q_4H_{41}$ through SVD (364). The transition from local to cross-link projected SVD is shown via arrow (382).

Following this processing, each STA outputs CSI feedback. Specifically, STA1 and STA2 transmit a joint CSI output (371), and STA3 and STA4 transmit another joint CSI output (372). These CSI values encode information derived from the direct and projected SVD operations and allow the APs to compute precoding matrices for CoBF transmissions without requiring reconstruction of full channel matrices across APs and STAs.

Joint sounding in FIG. 3 may reduce channel sounding latency by allowing multiple APs to transmit training signals in a coordinated manner. This enables STAs to generate feedback for all APs during the same interval, thereby improving synchronization. Responsiveness may also be improved because the system can update beamforming decisions quickly, and overhead may be reduced by minimizing the number of separate sounding and feedback exchanges.

In FIG. 3, svd is represented by the following equation:

$$ svd\left(H_{ij}\right) = U_{ij}S_{ij}\left(V_{ij}\right)^H = \left( U_{ij}^{(1)} \; U_{ij}^{(0)} \right) \begin{pmatrix} S_{ij}^{(1)} & \\ & S_{ij}^{(0)} \end{pmatrix} \left( V_{ij}^{(1)} \; V_{ij}^{(0)} \right)^H \; (1) $$

with respect to svd(H) = U*S*V$^H$, S and V are fed back and V$^H$ is the transpose and conjugate of V. $U_{ij} = \left( U_{ij}^{(1)} \; U_{ij}^{(0)} \right)$, $U_{ij}^{(1)}$ and $U_{ij}^{(0)}$ are sub-matrices, so are $S_{ij}$ and $V_{ij}$.

FIG. 4 is a block diagram illustrating a CoBF transmission scenario in a wireless communication system, and signal processing operations performed at multiple receivers, according to an embodiment. The system includes two APs, AP1 (405) and AP2 (410), and four STAs, STA1 (415), STA2 (420), STA3 (425), and STA4 (430). Each AP transmits spatially multiplexed data streams using a precoding unit, e.g., AP1 includes precoding unit 406, and AP2 includes precoding unit 416. Each AP is connected to a plurality of transmit antennas, and each STA includes receive antennas for MIMO reception.

AP1 (405) transmits a signal vector $x_1$ (407), derived from the data stream vector $(d_{11},d_{21})$ (408). In this case, $d_{11}$ represents data from AP1 to STA1 and $d_{21}$ represents data from AP1 to STA2. Similarly, AP2 (410) transmits a signal vector $x_2$ (417), derived from data stream vector $(d_{32},d_{42})$ (418). In this case, $d_{32}$ represents data from AP2 to STA3 and $d_{42}$ represents data from AP2 to STA4. The transmitted signals are generated by applying spatial precoding to steer the data streams toward their respective STAs while mitigating interference with others.

Each STA receives a composite signal through multiple wireless channels, each represented by a channel matrix. The channel matrices H between the APs and the STAs include: from AP1 (405): $H_{11}$ (435) to STA1 (415); $H_{21}$ (436) to STA2 (420); and from AP2 (410): $H_{32}$ (437) to STA3 (425); $H_{42}$ (438) to STA4 (430).

Cross-link interference channel matrices are also present: $H_{12}$, $H_{22}$, $H_{31}$ and $H_{41}$ (439a-439d) represent channels carrying interfering signals from APs to unintended STAs. The cross-link interference channels are denoted as: $H_{12}$ (439a), $H_{22}$ (439b), $H_{31}$ (439c) and $H_{41}$ (439d) and by the dotted line arrows between the APs and the STAs.

As can be seen in this example, since the total number of receive antennas from all participating STAs is larger than the number of physical antennas per AP, the signal received by STA1 may also contain signals for other stations, in addition to the desired signal for STA1. For each STA, the physical antennas are labeled a and b. For example, the physical antennas for STA1 are labeled a1, b1, x1, the physical antennas for STA2 are labeled a2, b2, x2, and so forth.

The transmitted signals from AP1 to AP2 are as follows:

AP1:

$$ x_1 = P_{11}d_{11} + P_{21}d_{21} $$

AP2:

$$ x_2 = P_{32}d_{32} + P_{42}d_{42} $$

$P_{mn}$, $d_{mn}$ are pre-coding matrices and data from the n-th AP to an m-th user $X_n$ is the transmitted signal from the n-th AP.

The received signal at STA, e.g., STA1, is denoted as, $r_1$:

$H_{mn}$ is the channel from n-th AP to m-th user

$n_m$ is the additive noise to the m-th user

$$r_1 = H_{11}x_1 + H_{12}x_2 = \underbrace{H_{11}P_{11}d_{11}}_{desired} + \underbrace{H_{11}P_{21}d_{21} + H_{12}P_{32}d_{32} + H_{12}P_{42}d_{42}}_{\text{multi-user interference (MUI)}} + n_1$$

$$= A_1 d_{11} + w_1, \text{in a short notation}$$

The above scheme may be referred to as full-nulling (by precoding) when multi-user interference (MUI) is zero, and partial nulling otherwise.

With a pre-specified optimization criterion, the goal of the optimal linear receiver for user1 is to find the matrix $W_1$ so that $\hat{d}_{11} = W_1 r_1$ is the optimal estimation.

With $w_1$ being a sum of interference and noise, the estimation of the covariance matrix, $E\left[w_1 w_1^H\right]$ could be complex.

Each STA processes its received signal using a projection matrix $Q_1$ to $Q_4$ (451-454) to extract the desired components. Dimensions of $Q_1$-$Q_4$ may be independent of each other. For example, $P_{11}/P_{21}/P_{32}/P_{42}$ can be designed in such a way that $Q_1$ is represented as follows:

$$Q_1(H_{11}P_{21}d_{21} + H_{12}P_{32}d_{32} + H_{12}P_{42}d_{42}) = 0$$

The modified equation:

$$z_1 = Q_1 r_1 = Q_1\left(H_{11}x_1 + H_{12}x_2\right)$$

$$= \underbrace{Q_1 H_{11}P_{11}d_{11}}_{desired} + \underbrace{Q_1\left(H_{11}P_{21}d_{21} + H_{12}P_{32}d_{32} + H_{12}P_{42}d_{42}\right)}_{interference} + Q_1 n_1$$

$$= Q_1 H_{11}P_{11}d_{11} + Q_1 n_1 = \tilde{A}_1 d_{11} + \tilde{n}_1, \text{ in a short notation}$$

In this case, the estimation of the covariance matrix of noise, $E\left[\tilde{n}_1 \tilde{n}_1^H\right] = Q_1 E\left[n_1 n_1^H\right] Q_1^H$, is simplified.

We can then easily find the optimal linear receiver for the model $z_1 = \hat{A}_1 d_{11} + \tilde{n}_1$.

Here is an SVD in the example shown in FIG. 4.

$$H_{11} = U_{11}S_{11}V_{11}^H = \begin{pmatrix} U_{11}^{(1)} & U_{11}^{(0)} \end{pmatrix} \begin{pmatrix} S_{11}^{(1)} & 0 \\ 0 & S_{11}^{(0)} \end{pmatrix} \begin{pmatrix} V_{11}^{(1)} & V_{11}^{(0)} \end{pmatrix}^H$$

$H_{11}$:3×8

$U_{11}$: $3 \times 3$; $U_{11}^{(1)}: 3 \times 2$; $U_{11}^{(0)}: 3 \times 1$;

$S_{11}$:3 × 3; $S_{11}^{(1)}: 2 \times 2$; $S_{11}^{(0)}: 1 \times 1$; Note: $S_{11}$ is diagonal

$V_{11}$:8 × 3; $V_{11}^{(1)}: 8 \times 2$; $V_{11}^{(0)}: 8 \times 1$;

$$Q_1 = \left(U_{11}^{(1)}\right)^H$$

For completeness, the terms inside () are target signals.

$$r_1 = H_{11}x_1 + H_{12}x_2 = (H_{11}P_{11}d_{11}) + H_{11}P_{21}d_{21} + H_{12}P_{32}d_{32} + H_{12}P_{42}d_{42} + n_1$$

$$r_2 = H_{21}x_1 + H_{22}x_2 = H_{21}P_{11}d_{11} + (H_{21}P_{21}d_{21}) + H_{22}P_{32}d_{32} + H_{22}P_{42}d_{42} + n_2$$

$$r_3 = H_{31}x_1 + H_{32}x_2 = H_{31}P_{11}d_{11} + H_{31}P_{21}d_{21} + (H_{32}P_{32}d_{32}) + H_{32}P_{42}d_{42} + n_3$$

$$r_4 = H_{41}x_1 + H_{42}x_2 = H_{41}P_{11}d_{11} + H_{41}P_{21}d_{21} + H_{42}P_{32}d_{32} + (H_{42}P_{42}d_{42}) + n_4$$

The resulting projected signal $z_1$ (461) is provided to a demodulator 465a for data recovery. The remaining projected signals may be provided to respective demodulators, for example. According to one embodiment, the demodulator 465a may be part of STA 415. Similarly, matrix 451 of matrices 451-454 may be part of STA 415, with matrix 452 being part of STA2 420 and so forth.

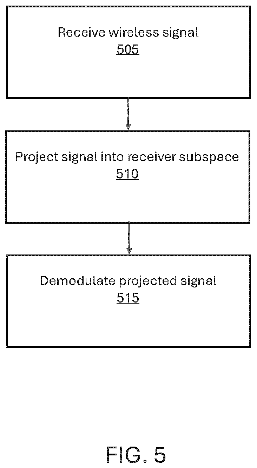

FIG. 5 is a flowchart illustrating a method of processing a signal at a receiver in a wireless communication system, according to an embodiment. The method may be implemented in a receiver device (e.g., any of STAs 415-430 shown in FIG. 4), and supports CoBF and MU-MIMO transmissions.

At step 505, the receiver receives a wireless signal including a plurality of spatially multiplexed data streams transmitted by one or more APs using either CoBF or MU-MIMO transmission techniques. For example, in CoBF, two or more APs may jointly transmit data streams to different users with synchronization and interference management. In MU-MIMO, a single AP transmits multiple spatial streams to different users simultaneously.

The received signal $r_i$ at the receiver can be modeled as:

$$r_i = \sum_j H_{ij}x_j + n_i$$

where $H_{ij}$ is the channel matrix from $AP_j$ to receiver i, $x_j$ is the transmit vector from $AP_j$, and $n_i$ represents noise and/or interference.

At step 510, the receiver projects the received signal into a subspace (i.e. span(Qi)) corresponding to the receiver, in order to isolate the data streams intended for it. This projection is performed using a projection matrix $Q_i$, which is derived from the dominant left singular vectors of the effective channel matrix corresponding to the receiver.

The projection matrix is defined as:

$$Q_i = \left( U_{ij}^{(1)} \right)^H$$

where ( $U_{ij}^{(1)}$ ) is a matrix comprising the dominant left singular vectors obtained form singular value decomposition (SVD) of the effective channels.

The projected signal is then computed as:

$$z_i = Q_i * r_i$$

At step 515, the projected signal $z_i$ is provided to a demodulator that recovers the data stream(s) intended for the receiver. According to one embodiment, the receiver utilizes a shared signal processing pipeline that supports both CoBF and MU-MIMO, thus reducing implementation complexity and avoiding separate demodulator logic for each transmission mode.

The shared pipeline may include: a matrix projection stage (e.g., using $Q_i$), and a unified demodulator stage that processes the extracted signal regardless of whether the data originated from a coordinated multi-AP CoBF transmission or a single-AP MU-MIMO transmission.

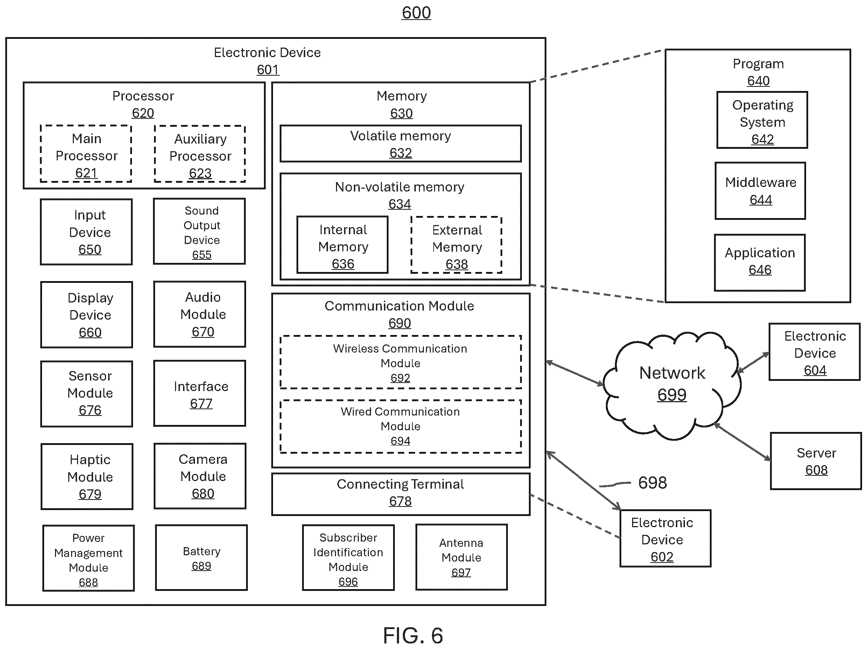

FIG. 6 is a block diagram of an electronic device in a network environment 700, according to an embodiment.

Referring to FIG. 6, an electronic device 601 in a network environment 600 may communicate with an electronic device 602 via a first network 698 (e.g., a short-range wireless communication network), or an electronic device 604 or a server 608 via a second network 699 (e.g., a long-range wireless communication network). The electronic device 601 may communicate with the electronic device 604 via the server 608. The electronic device 601 may include a processor 620, a memory 630, an input device 650, a sound output device 655, a display device 660, an audio module 670, a sensor module 676, an interface 677, a haptic module 679, a camera module 680, a power management module 688, a battery 689, a communication module 690, a subscriber identification module (SIM) card 696, or an antenna module 697. In one embodiment, at least one (e.g., the display device 660 or the camera module 680) of the components may be omitted from the electronic device 601, or one or more other components may be added to the electronic device 601. Some of the components may be implemented as a single integrated circuit (IC). For example, the sensor module 676 (e.g., a fingerprint sensor, an iris sensor, or an illuminance sensor) may be embedded in the display device 660 (e.g., a display).

The processor 620 may execute software (e.g., a program 640) to control at least one other component (e.g., a hardware or a software component) of the electronic device 601 coupled with the processor 620 and may perform various data processing or computations.

As at least part of the data processing or computations, the processor 620 may load a command or data received from another component (e.g., the sensor module 676 or the communication module 690) in volatile memory 632, process the command or the data stored in the volatile memory 632, and store resulting data in non-volatile memory 634. The processor 620 may include a main processor 621 (e.g., a central processing unit (CPU) or an application processor (AP)), and an auxiliary processor 623 (e.g., a graphics processing unit (GPU), an image signal processor (ISP), a sensor hub processor, or a communication processor (CP)) that is operable independently from, or in conjunction with, the main processor 621. Additionally or alternatively, the auxiliary processor 623 may be adapted to consume less power than the main processor 621, or execute a particular function. The auxiliary processor 623 may be implemented as being separate from, or a part of, the main processor 621.

The auxiliary processor 623 may control at least some of the functions or states related to at least one component (e.g., the display device 660, the sensor module 676, or the communication module 690) among the components of the electronic device 601, instead of the main processor 621 while the main processor 621 is in an inactive (e.g., sleep) state, or together with the main processor 621 while the main processor 621 is in an active state (e.g., executing an application). The auxiliary processor 623 (e.g., an image signal processor or a communication processor) may be implemented as part of another component (e.g., the camera module 680 or the communication module 690) functionally related to the auxiliary processor 623.

The memory 630 may store various data used by at least one component (e.g., the processor 620 or the sensor module 676) of the electronic device 601. The various data may include, for example, software (e.g., the program 640) and input data or output data for a command related thereto. The memory 630 may include the volatile memory 632 or the non-volatile memory 634. Non-volatile memory 634 may include internal memory 636 and/or external memory 638.

The program 640 may be stored in the memory 630 as software, and may include, for example, an operating system (OS) 642, middleware 644, or an application 646.

The input device 650 may receive a command or data to be used by another component (e.g., the processor 620) of the electronic device 601, from the outside (e.g., a user) of the electronic device 601. The input device 650 may include, for example, a microphone, a mouse, or a keyboard.

The sound output device 655 may output sound signals to the outside of the electronic device 601. The sound output device 655 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 660 may visually provide information to the outside (e.g., a user) of the electronic device 601. The display device 660 may include, for example, a display, a hologram device, or a projector and control circuitry to control a corresponding one of the display, hologram device, and projector. The display device 660 may include touch circuitry adapted to detect a touch, or sensor circuitry (e.g., a pressure sensor) adapted to measure the intensity of force incurred by the touch.

The audio module 670 may convert a sound into an electrical signal and vice versa. The audio module 670 may obtain the sound via the input device 650 or output the sound via the sound output device 655 or a headphone of an external electronic device 602 directly (e.g., wired) or wirelessly coupled with the electronic device 601.

The sensor module 676 may detect an operational state (e.g., power or temperature) of the electronic device 601 or an environmental state (e.g., a state of a user) external to the electronic device 601, and then generate an electrical signal or data value corresponding to the detected state. The sensor module 676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 677 may support one or more specified protocols to be used for the electronic device 601 to be coupled with the external electronic device 602 directly (e.g., wired) or wirelessly. The interface 677 may include, for example, a high- definition multimedia interface (HDMI), a universal serial bus (USB) interface, a secure digital (SD) card interface, or an audio interface.

A connecting terminal 678 may include a connector via which the electronic device 601 may be physically connected with the external electronic device 602. The connecting terminal 678 may include, for example, an HDMI connector, a USB connector, an SD card connector, or an audio connector (e.g., a headphone connector).

The haptic module 679 may convert an electrical signal into a mechanical stimulus (e.g., a vibration or a movement) or an electrical stimulus which may be recognized by a user via tactile sensation or kinesthetic sensation. The haptic module 679 may include, for example, a motor, a piezoelectric element, or an electrical stimulator.

The camera module 680 may capture a still image or moving images. The camera module 680 may include one or more lenses, image sensors, image signal processors, or flashes. The power management module 688 may manage power supplied to the electronic device 601. The power management module 688 may be implemented as at least part of, for example, a power management integrated circuit (PMIC).

The battery 689 may supply power to at least one component of the electronic device 601. The battery 689 may include, for example, a primary cell which is not rechargeable, a secondary cell which is rechargeable, or a fuel cell.

The communication module 690 may support establishing a direct (e.g., wired) communication channel or a wireless communication channel between the electronic device 601 and the external electronic device (e.g., the electronic device 602, the electronic device 604, or the server 608) and performing communication via the established communication channel. The communication module 690 may include one or more communication processors that are operable independently from the processor 620 (e.g., the AP) and supports a direct (e.g., wired) communication or a wireless communication. The communication module 690 may include a wireless communication module 692 (e.g., a cellular communication module, a short-range wireless communication module, or a global navigation satellite system (GNSS) communication module) or a wired communication module 694 (e.g., a local area network (LAN) communication module or a power line communication (PLC) module). A corresponding one of these communication modules may communicate with the external electronic device via the first network 698 (e.g., a short-range communication network, such as BLUETOOTH™, wireless-fidelity (Wi-Fi) direct, or a standard of the Infrared Data Association (IrDA)) or the second network 699 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 692 may identify and authenticate the electronic device 601 in a communication network, such as the first network 698 or the second network 699, using subscriber information (e.g., international mobile subscriber identity (IMSI)) stored in the subscriber identification module 696.

The antenna module 697 may transmit or receive a signal or power to or from the outside (e.g., the external electronic device) of the electronic device 601. The antenna module 697 may include one or more antennas, and, therefrom, at least one antenna appropriate for a communication scheme used in the communication network, such as the first network 698 or the second network 699, may be selected, for example, by the communication module 690 (e.g., the wireless communication module 692). The signal or the power may then be transmitted or received between the communication module 690 and the external electronic device via the selected at least one antenna.

Commands or data may be transmitted or received between the electronic device 601 and the external electronic device 604 via the server 608 coupled with the second network 699. Each of the electronic devices 602 and 604 may be a device of a same type as, or a different type, from the electronic device 601. All or some of operations to be executed at the electronic device 601 may be executed at one or more of the external electronic devices 602, 604, or 608. For example, if the electronic device 601 should perform a function or a service automatically, or in response to a request from a user or another device, the electronic device 601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 601. The electronic device 601 may provide the outcome, with or without further processing of the outcome, as at least part of a reply to the request. To that end, a cloud computing, distributed computing, or client-server computing technology may be used, for example.

In one embodiment, the methods described with reference to FIGS. 1-6 may be implemented across multiple devices within the wireless communication system. For example, the CoBF and MU-MIMO transmission techniques shown in FIGS. 1-3 may be performed by one or more APs equipped with baseband processing units or dedicated precoding hardware. Meanwhile, the signal reception and processing operations described in FIGS. 4 and 5, such as receiving spatially multiplexed data streams, performing optional whitening, projecting the signal using a subspace-based projection matrix, and decoding the extracted data, may be executed by the electronic device 601 shown in FIG. 6. For example, such operations may be carried out by the processor 620 (e.g., main processor 621 or auxiliary processor 623), or by specialized hardware within the communication module 690.

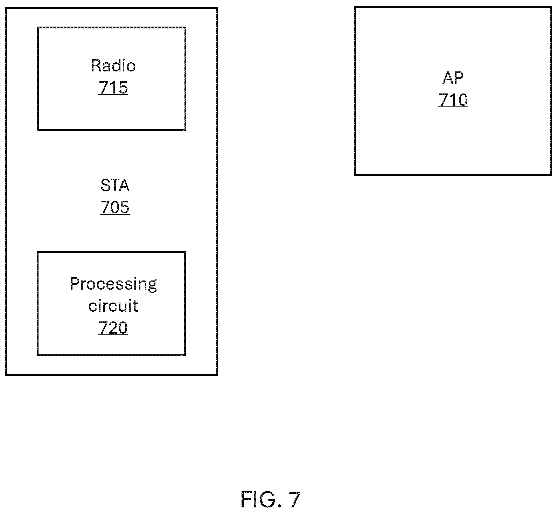

FIG. 7 shows a system including a STA 705 and an AP 710, in communication with each other. The STA may include a radio 715 and a processing circuit (or a means for processing) 720, which may perform various methods disclosed herein, e.g., the method illustrated in FIG. 1. For example, the processing circuit 720 may receive, via the radio 715, transmissions from the network node (AP) 710, and the processing circuit 720 may transmit, via the radio 715, signals to the AP 710. The system illustrated in FIG. 7 provides a hardware context for implementing CoBF signaling and stream management techniques according to embodiments of the present disclosure.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1.   A method for providing coordinated beamforming, CoBF, transmission in a wireless communication system, the method comprising:

     selecting a plurality of access points, APs, (105, 110, 301, 302, 405, 410) to transmit to a plurality of stations (, STAs, (115, 120, 125, 130, 305-308, 415, 420, 425, 430) in a CoBF transmission;
     assigning spatial streams to the STAs (115, 120, 125, 130, 305-308, 415, 420, 425, 430) such that each STA is assigned no more than a threshold number of spatial streams, and the total number of spatial streams assigned to the STAs does not exceed a maximum total stream count;
     configuring each of the APs (105, 110, 301, 302, 405, 410) to use a common number of logical antennas selected from a set of antenna counts; and
     mapping a number of physical antennas at each AP to the common number of logical antennas using a configurable antenna reduction method.

2.   The method of claim 1, wherein the plurality of APs (105, 110, 301, 302, 405, 410) includes two APs.

3.   The method of claim 1 or 2, wherein the plurality of STAs (115, 120, 125, 130, 305-308, 415, 420, 425, 430) includes no more than four STAs.

4. The method of any one of claims 1 to 3, wherein each STA is assigned no more than two spatial streams.

5. The method of any one of claims 1 to 4, wherein the total number of spatial streams assigned to the STAs is four or fewer.

6. The method of any one of claims 1 to 5, wherein the set of antenna counts includes four and eight per AP.

7. The method of any one of claims 1 to 6, wherein the configurable antenna reduction method comprises mapping a subset of physical antennas at each AP.

8. The method of any one of claims 1 to 7, wherein the configurable antenna reduction method comprises applying a linear transformation to signals from the physical antennas to form logical antennas.

9. The method of any one of claims 1 to 8, further comprising transmitting, from at least one of the APs (105, 110, 301, 302, 405, 410), a sounding signal to the STAs (115, 120, 125, 130, 305-308, 415, 420, 425, 430) to obtain channel state information for the CoBF transmission.

10. The method of claim 9, wherein the sounding signal comprises a null data packet, NDP, that includes a basic service set identifier, BSSID, corresponding to one of the APs (105, 110, 301, 302, 405, 410).

11. The method of any one of claims 1 to 10, wherein each of the APs (105, 110, 301, 302, 405, 410) transmits a preamble including identical pre-transmission fields during a synchronization procedure for the CoBF transmission.

12. The method of any one of claims 1 to 11, further comprising:
   receiving, at one or more of the STAs (115, 120, 125, 130, 305-308, 415, 420, 425, 430), training signals from the plurality of APs (105, 110, 301, 302, 405, 410) during the CoBF sounding transmission; and computing feedback at the one or more STAs based on estimated channel matrices.

13. The method of claim 12, wherein the feedback from a STA is computed by separately applying singular value decomposition, SVD, to a first set of channel matrices corresponding to a first AP associated with the STA, and a second set of channel matrices corresponding to a second AP not associated with the STA, the second set of channel matrices obtained by multiplying selected pre-coding matrices.

14. A method of processing a wireless signal at a receiver in a wireless communication system, the method comprising:

   receiving a wireless signal including a plurality of spatially multiplexed data streams transmitted by one or more access points, APs, (105, 110, 301, 302, 405, 410) using coordinated beamforming, CoBF, or multi-user multiple-input multiple-output, MU-MIMO;
   processing the wireless signal to extract one or more data streams intended for the receiver by projecting the wireless signal into a subspace corresponding to the receiver; and
   providing the extracted data streams to a demodulator for data recovery, wherein the processing is performed using a shared signal processing pipeline for the CoBF and MU-MIMO transmissions.

15. The method of claim 14, wherein the projection is performed using a projection matrix generated based on channel state information corresponding to the receiver.

STA1 — 115
116-1, 116-2, 116-3

STA2 — 120
121-1, 121-2, 121-3

STA3 — 125
126-1, 126-2, 126-3

STA4 — 130
131-1, 131-2, 131-3

AP1 — 105
106-1 (1), 106-2 (2), . . . 106-8 (8)

AP2 — 110
111-1 (1), 111-2 (2), . . . 111-8 (8)

FIG. 1

```
┌─────────────────────────┐
│  Start CoBF configuration│
│        procedure         │
│          205             │
└─────────────────────────┘
            │
            ▼
┌─────────────────────────┐                              ┌─────────────────────────┐
│  Select participating APs│                              │Select logical antenna count│
│          210             │                              │          225             │
│                          │                              └─────────────────────────┘
└─────────────────────────┘                                          │
            │                                                         ▼
            ▼                                            ┌─────────────────────────┐
┌─────────────────────────┐                              │  Configure antenna mapping│
│    Identify target STAs  │                              │        at each AP        │
│          215             │                              │          230             │
│                          │                              └─────────────────────────┘
└─────────────────────────┘                                          │
            │                                                         ▼
            ▼                                            ┌─────────────────────────┐
┌─────────────────────────┐                              │    End configuration     │
│ Assign spatial streams to STAs│                        │          235             │
│          220             │──────────────────────┐      │                          │
│                          │                      │      └─────────────────────────┘
└─────────────────────────┘
```

FIG. 2

FIG. 3

FIG. 4

Receive wireless signal
505

Project signal into receiver subspace
510

Demodulate projected signal
515

FIG. 5

FIG.6

AP
710

Radio
715

STA
705

Processing
circuit
720

FIG. 7

| | Europäisches Patentamt<br>European Patent Office<br>Office européen des brevets | **EUROPEAN SEARCH REPORT** | **Application Number**<br>EP 25 20 0155 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/268297 A1 (HUAWEI TECH CO LTD [CN]; EZRI DORON [DE]) 29 December 2022 (2022-12-29) | 1-6,9-15 | INV.<br>H04B7/024 |
| Y | * page 11 - page 15; figures 4, 6, 8 *<br>----- | 7,8 | |
| Y | C-B CHAE ET AL: "Coordinated beamforming with limited feedback in the MIMO broadcast channel", IEEE JOURNAL ON SELECTED AREAS IN COMMUNICATIONS, IEEE SERVICE CENTER, PISCATAWAY, US, vol. 26, no. 8, 1 October 2008 (2008-10-01), pages 1505-1515, XP011236226, ISSN: 0733-8716, DOI: 10.1109/JSAC.2008.081016 | 7,8 | |
| A | * page 1 *<br>----- | 1-6,9-15 | |
| T | SHIMI SHILO (HUAWEI): "Zero MUI Coordinated BF", IEEE DRAFT; 11-23-1998-00-00BN-ZERO-MUI-COORDINATED-BF , IEEE-SA MENTOR, PISCATAWAY, NJ USA , vol. 802.11 UHR; 802.11bn 13 January 2024 (2024-01-13), pages 1-22, XP068275465, Retrieved from the Internet: URL:https://mentor.ieee.org/802.11/dcn/23/ 11-23-1998-00-00bn-zero-mui-coordinated-bf .pptx [retrieved on 2024-01-13]<br>-----<br>-/-- | | **TECHNICAL FIELDS SEARCHED (IPC)**<br><br>H04B |

The present search report has been drawn up for all claims

| Place of search | Date of completion of the search | Examiner |
|---|---|---|
| Munich | 20 January 2026 | Tessier, Serge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 25 20 0155

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | AIGUO YAN (SAMSUNG): "Unified CoBF and MUMIMO Schemes with Zero MUI", IEEE DRAFT; 11-24-1432-01-00BN-UNIFIED-COBF-AND-MUMIMO-SCHEMES-WITH-ZERO-MUI, IEEE-SA MENTOR, PISCATAWAY, NJ USA , vol. 802.11 UHR; 802.11bn, no. 1 11 September 2024 (2024-09-11), pages 1-20, XP068309071, Retrieved from the Internet: URL:https://mentor.ieee.org/802.11/dcn/24/ 11-24-1432-01-00bn-unified-cobf-and-mumimo -schemes-with-zero-mui.pptx [retrieved on 2024-09-11] * page 11 - page 13 * ----- | | |

TECHNICAL FIELDS
SEARCHED (IPC)

The present search report has been drawn up for all claims

| Place of search | Date of completion of the search | Examiner |
|---|---|---|
| Munich | 20 January 2026 | Tessier, Serge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 20 0155

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2026

| Patent document cited in search report | Publication date | Patent family member(s) | Publication date |
|---|---|---|---|
| WO 2022268297 A1 | 29-12-2022 | EP 4197108 A1<br>WO 2022268297 A1 | 21-06-2023<br>29-12-2022 |

EPO FORM P0459

For more details about this annex : see Official Journal of the European Patent Office, No. 12/82